# EUROPÄISCHE PATENTSCHRIFT

(11) **EP 1 393 286 B1**
(45) Veröffentlichungstag und Bekanntmachung des Hinweises auf die Patenterteilung: **04.04.2007**
(21) Anmeldenummer: 02706620.8
(22) Anmeldetag: 23.01.2002
(51) Int. Cl.: G09B 9/00

(54) **REALITY SIMULATIONS SYSTEM (RSS)**
REALITY SIMULATION SYSTEM (RSS)
SYSTEME DE SIMULATION PAR REALITE VIRTUELLE

(30) Priorität: 23.01.2001 DE 10104308; 09.02.2001 DE 10106334; 29.08.2001 DE 10142916
(43) Veröffentlichungstag der Anmeldung: 03.03.2004
(73) Patentinhaber: Agentur manitours, 14469 Potsdam (DE)
(72) Erfinder: WIEDENHÖFT, Peter, 14469 Potsdam (DE)
(74) Vertreter: Effert, Bressel und Kollegen
(86) Internationale Anmeldenummer: PCT/DE2002/000219
(87) Internationale Veröffentlichungsnummer: WO 2002/059853

(56) Entgegenhaltungen:
- DE-A1- 19 909 936
- GB-A- 2 337 828
- JP-A- 3 021 288
- JP-A- 7 084 722
- JP-A- 10 043 429
- JP-A- 10 080 577
- US-A- 4 804 254
- US-A- 5 490 784
- US-A- 5 592 401
- US-A- 5 864 333
- US-A- 6 008 784
- US-A- 6 135 928
- US-A- 6 159 100

## Beschreibung

Die Erfindung betrifft ein Reality Simulations System virtuellen Realitätssimulation mit einem Bewegungskäfig, einem Rechnersystem sowie damit koppelbare Eingabe- und Ausgabegeräte für einen Benutzer des Systems, ausgebildet als Schuh bzw. Videowand und ein dafür verwendbares Vitalfunktions-Kontrollsystem.

Die Schaffung einer vom Computer generierten und vom Menschen aufgenommenen Realität steht hinter dem Begriff Virtuelle Realität (VR). Dabei soll beim Benutzer das Gefühl entstehen, dass diese virtuelle Realität mehr oder weniger der tatsächlichen entspricht, seine Sinne also so arbeiten, wie in seiner natürlichen Umwelt. Um dieses Ziel zu erreichen müssen die Sinne des Menschen getäuscht werden. Dazu bedient man sich technischer Hilfsmittel, die sich heute noch auf die folgenden Sinne beschränken: visueller-, akustischer- und Tastsinn.
(Vortrag: "Virtuelle Realität", Technische Fachhochschule Berlin, DE, 1997)

### Genereller Systemaufbau und Geräte

Ein herkömmliches VR System besteht aus einem visuellen Ausgabegerät für stereoskopische Ausgabe, einem Eingabegerät und einem VR Software System. Der konkrete Aufbau hängt vom Einsatzgebiet ab. Der Schwerpunkt von VR-Systemen liegt gegenwärtig auf der Generierung einer realistisch aussehenden Umgebung.
Ein grafikorientiertes VR System besteht im Allgemeinen aus einem Display für den Benutzer, einem Bewegungssensor um Interaktion zu ermöglichen, einer Computerhardware zur Generierung der virtuellen Umgebung, eine Datenbank für die 3 D-Objekte und der dazugehörigen Software. Man benötigt einerseits Geräte um dem Benutzer ein drei-Dimensionales Bild der virtuellen Umgebung zu vermitteln und andererseits Geräte um eine Interaktion mit der virtuellen Umgebung zu erlauben.

Eine Möglichkeit zur Visualisierung ist eine 3 D-Brille in Verbindung mit einem Monitor oder einem Projektor. Die Gläser dieser Brille bestehen aus einem Flüssigkristall, welcher bei entsprechender Ansteuerung durchsichtig oder undurchsichtig gemacht werden kann. Man hat somit für jedes Auge einen Flüssigkristallverschluss. Dabei wird ein Verschluss immer entgegengesetzt zum anderen geschlossen oder geöffnet. Der Computer erzeugt immer zwei Bilder der gleichen Szene, allerdings aus einer geringfügig anderen Perspektive. Durch die Synchronisation von Brille und Computer wird nun erreicht, dass jedes Auge ein etwas anderes Bild auf dem Bildschirm sieht. Hierdurch entsteht die Illusion einer drei-dimensionalen Ansicht des Computerbildes.
Eine andere Möglichkeit der Visualisierung ist ein Datenhelm ( HMD - Head-Mounted-Display). Dieses Gerät (manchmal auch als "Visette" oder "Boom" [Binocular Omni-Orientation Monitor] bezeichnet) besteht aus zwei kleinen Bildschirmen, jeweils einer pro Auge. Jeder Bildschirm zeigt dabei wiederum die virtuelle Umgebung aus einer etwas anderen Richtung, um einen dreidimensinalen Effekt zu erzeugen. Das Gesichtsfeld liegt bei den heute erhältlichen Modellen zwischen 60° und 90°. Solche Geräte gibt es auch in einer Ausführung bei der die Bildschirme transparent sind, somit bleibt auch die reale Umgebung noch sichtbar (augmented reality), Reales und Virtuelles werden gemischt.

Um eine Interaktion mit virtuellen Objekten zu ermöglichen, wird im Allgemeinen ein Datenhandschuh benutzt. Dieser besteht einerseits aus Sensoren um die Bewegung der Finger zu erfassen und andererseits aus einem Positionssensor (entweder elektromagnetisch, optisch oder Ultraschall) um die Position der Hand zu ermitteln. Man hat auch die Möglichkeit, einen Datenhandschuh mit Druckgebern auszurüsten, dadurch erhält man beim Anfassen eines virtuellen Objektes das Gefühl, dieses Objekt wirklich berührt zu haben. Es gibt auch ein System, bei dem sich der ganze Körper in einem Datenanzug befindet, um so alle Bewegungen des Körpers zu erfassen und in die virtuelle Umgebung umzusetzen.
Bei manchen Anwendungen (insbesondere im industriellen Bereich) ist es aber zu umständlich, sich immer den Datenhelm aufzusetzen und den Handschuh anzuziehen, deshalb wurde eine Kombination aus beiden entwickelt, das HCD (Head-Coupled-Display). Hierbei ist der Datenhelm auf eine Art Ständer montiert. Daran befindet sich ein beweglicher Arm, welcher mittels eines Griffes bewegt werden kann und so den Datenhandschuh ersetzt.

### Eingabe-Systemteile

Um eine möglichst realistische Interaktion zu erwirken, wurden neben den Klassikern Maus, Tastatur, Joystick etc. eine Reihe von Eingabegeräten entwickelt.

Durch mehrere am Benutzer angebrachten Sensoren wird deren relative Position zueinander und zu einigen Fixpunkten in seiner realen Umgebung ermittelt. Daraus lässt sich nun seine Position im fiktiven Raum errechnen. Technisch kann dies mit Radar, Ultraschall-, Infrarotgeräten oder auch magnetischen Feldern realisiert werden.

Über einen mit Lichtwellenreiter verkabelten Handschuh kann aus dem Lichtabfall circa die Krümmung der einzelnen Finger und des Handgelenkes ermittelt werden, somit wird eine Möglichkeit geschaffen, dem Benutzer ein wörtliches Eingreifen in den virtuellen Raum zu bieten.
Vom Prinzip gleich wie ein Handschuh ausgebildet, kann das System auf einen ganzen Anzug ausgedehnt worden.

### Ausgabe-Systemteile

Es handelt sich hierbei um eine Art Helm, den der Benutzer aufsetzt und sich somit von der Außenwelt abschneidet. Über zwei integrierte Displays werden abwechselnd Bilder für das linke und das rechte Auge sichtbar gemacht. Maßgebend für die Qualität solcher HMD's ist die erreichte Auflösung der Displays, die heute schon bis zu 1280x1024 Pixel darstellen. Mittels moderner Laserscans kann das Bild auch direkt auf die Retina projiziert werden.
Bei dem Ausgabegerät Shutterglasses handelt es sich um eine Brille, die jeweils ein Glas transparent und das andere undurchsichtig schaltet. Durch die Synchronisation mit einem Bildschirm bzw. mit einer Leinwand, die jeweils ein Bild für das linke bzw. das rechte Auge anzeigt, entsteht beim Benutzer der gewünschte stereoskopische Effekt.
Für die akustische Ausgabe wird auf Techniken aus der Unterhaltungselektronik zurückgegriffen. (Quadrophonie, Stereoton etc.). Eine Besonderheit ist allerdings das der Graphik entliehene Rederingverfahren. Es soll dem Benutzer eine bessere Orientierung bzw. Ortung von Schallquellen im virtuellen Raum ermöglichen.

Aus dem Internet unter der Adresse http://www.ikb.mart.ethz.ch/projects/fmea/index/index_virtualreality.html ist am 16.03.2001 um 10.10 Uhr eine Diplomarbeit von Orfeo Niedermann zu sehen gewesen, die unter anderem die Anwendungsmöglichkeiten eines Systems zur Darstellung virtueller Realität beschreibt und definiert als eine durch Computersimulation erzeugte Scheinwelt mit audiovisueller und taktiler Ausgestaltung. Dabei soll die virtuelle Umgebung ein in sich geschlossenes System, welches durch Zusammenspiel von Ein- und Ausgabegeräten mit einem Echtzeitcomputersystem dem Benutzer eine künstliche Welt mit seinen Sinnen erfahrbar machen soll. Dabei unterscheidet der Autor in drei Kategorien, die eine unterschiedliche Einbeziehung des Benutzers beinhalten und unterschiedlichen Aufwand erfordern:
- Desktop-Applikationen
   Hier würde auf einen Monitor die virtuelle Welt auf einem Bildschirm erscheinen womit ein Teil des Blickfeldes des Betrachters ausgefüllt wird. Die Kameraposition wird dabei durch beliebige Eingabegeräte wie Maus und ähnliches kontrolliert, weil gegebenen Fall dort mit Hilfe spezieller Brillen eines Stereoskop-Darstellung aber auch mit speziellen Brillen für das Synchronisieren perspektivischer Ansichten beider Augen verwendet.
- Immersive virtuelle Umgebung
   Die am weitesten entwickelte Technik benutzt dabei eine Art Datenübertragungshirn zur Stimulierung von Augen und Gehör (HMD) mit zwei Monitoren, die den beiden Augen zugeordnet sind um ein Stereobild zu erzeugen. Gesteigert wird diese Technik durch das System CAVE, wird in aus mehreren Projektionssystemen aufgebauter Raum, wobei die Wände orthogonal zueinander angeordnet sind, die Ansichten durch eine Rückprojektion gebildet werden. Ein solches System wird für Fahr-Simulationen benutzt.
- Durchmischte Umgebung
   Hier wird ein Szene visuell durch Überlagerung einer realen und einer virtuellen Welt dargestellt. Beispiele dafür sind Trick-Filmszenen und reale Nutzungen für Flugsimulation, wobei dem Piloten eine virtuelle Flurkarte mit einer realen Oberfläche von einer Kamera visuell überlagert wird (US-Patent 5,394,517).

### Anwendungen

Tatsächliche Anwendungsbeispiele werden in der Architektur durch CAD entworfen. Modellierte Bauobjekte können mit Hilfe spezieller Software generierte Szenen mit Lichteffekten, Materialeigenschaften und Oberflächentexturen so darstellen, dass der Benutzer den Eindruck gewinnt, er könne in dem Raum spazieren gehen, weil er sich verschiedene Aspekte bei Richtungsänderungen optisch darstellen lassen kann.
Auch in der Produktentwicklung zum Beispiel für Designstudien oder mit Hilfe von Finite-Elemente-Programme, lassen sich z. B. Fahrzeuge, Teile der Innenausstattung realistisch visualisieren und deren Funktionsweise, Passgenauigkeit und Bedienbarkeit testen. Ebenfalls dargestellt sind virtuelle Windtunnel der NASA.
Für die Ausbildung werden als Beispiele für die Schulung Sichtsimulatoren, für z.B. wie Beispiel LKW-Schulung angegeben oder die mikroskopische/makroskopische Darstellung von Phänomenen aus der Physik, der Chemie, der Astronomie und der Biologie sowie die Simulation von Operationen eines Chirurgen.
Weitere Beispiele sind die Fernsteuerung von Robotern und Operatoren in kontaminierten oder nicht erreichbaren Umgebungen sowie Prozesssteuerungen von Verfahrensabläufen mit modifizierbaren Prozessparametern in der Fertigung bzw. in der Verfahrenstechnik und Verkehrsführung.
Im Bereich des Marketing wird als Beispiel die Produktdarstellung auch in seiner dreidimensionalen Form und dessen Funktionseigenschaften, Gebrauchsnutzen. Weitere Beispiele beziehen sich dann auf Wetter- und Tourismus-Informationssysteme, die Spielwelt-Kommunikationssysteme sowie die Darstellung von Finanz-Analyseinstrumenten.

Am 16.03.2001 um 11 Uhr war unter der Adresse http://vr-atlantis.com/vr_systems_guidelvr_systems_list3.html eine Übersicht über VR Entertainment Center zu sehen in der 153 VR-Center gelistet waren, bei denen in unterschiedlicher Art und Weise an unterschiedlichen Geräten virtuelle Realität vermittelt werden soll.

Das häufigste System besteht darin, daß sich ein Benutzer für ein Spiel in einem speziellen Sitz niederläßt, einen HMD-Aufsatz und ein Eingabegerät in Form eines Gewehrs oder eines Lenkrades oder eines Joystick bedient, um dann für sich allein oder gegen weitere Mitspieler ein vom Computer abrufbares Spiel zu spielen.

Das System VR KOBRA gehört, als immersives System bezeichnet, dazu. Der Benutzer setzt sich ein HMD auf und während er stehend oder sitzend in einem geschlossenem Ring agiert, wobei der HMD von einem Galgen herabhängt. Als Kontrollinstrument wird ein 3D-Joystick verwendet. Das Gerät ist mit einem Computer der Pentium-Klasse ausgestattet. Innerhalb des Ringes, der aus Fierglas gestaltet ist, kann sich der Benutzer sehr begrenzt bewegen, mit einer Reihe von Spielen, hier mit Schießübungen Ausführungen.

Ein ähnliches System wird mit VRE POD bezeichnet; das unterscheidet sich von dem VR KOBRA-System lediglich dadurch, dass eine andere Art von HMD benutzt wird, um Schiess-Übungen zu veranstalten. In diesem Fall sind das HMD und auch der Joystick nicht an dem Gerät fixiert, sondern über Kabel geführt, die der Benutzer dann bei eventuellem Bewegen in dem etwa einen Meter durchmessenden Ring trägt.

Als weitere Systeme werden in der Internetdarstellung noch VIRTUAL VOYAGE und VIRTUAL ODYSSEE, sowie TOTAL RECOYAL, REALITY ROCKET aufgelistet, bei denen der Benutzer innerhalb eines Begrenzungsraums seine Spiele absolviert.

Ausführlich beschrieben ist auch das ABYSS GAME SYSTEM, Atlantis Cyberspace, Inc., Honolulu, US, bei dem in einem etwa einen Meter durchmessenden Ring mit Handlauf in etwa 1 m Höhe auf einem Podest die Person ähnlich wie beim System VR-KOBRA mit einem HMD-System an einem Galgen, sowie ein ebenfalls an diesen Galgen gekoppeltes Handwerkzeug entsprechende Spiele ausführt. Im weiteren sind das HMD mit Übertragung von akustischen und optischen Signalen, der Rechner in seinen Details, sowie der Aufenthaltsring mit einer Verschlusskontrolle mittels elektromagnetischem Sensor dargestellt, der prüft, ob der Stahlring geschlossen ist, bevor der Benutzer sein Spiel beginnt. Der Benutzer verspüre an einen realen Rückschlag der Waffe, ein virtuelles Maschinengewehr.

Ein derartiges Spiel-System ist technisch in der US-A 6,159,100 näher erläutert. Ein Rechnersystem weist einzelne Stationen auf für einen Benutzer mit Reizeinrichtungen für dessen Sinne. Aufgeführt sind ein Ventilator, ein Bass-Lautsprecher, eine Hitzequelle und eine Vibrationseinrichtung für eine Bodenplatte auf der der Benutzer steht und ein HMD trägt, mit dessen Hilfe er visuelle Eindrücke erhält und unter der Beeinflussung durch die Geräte Spiele spielen kann. Eigene Laufbewegung ist nicht vorgesehen.

Aus der US-A 5,762,612 ist bekannt, mit Hilfe von Impulsen den Bewegungs-und Gleichgewichtssinn zu reizen und so gezielt auf eine Person einzuwirken, insbesondere wenn sich dies Person in einer virtuellen Realität befindet.

Obwohl es nicht dargestellt ist, ist insbesondere aus dem letzten Zitat klar, dass das Eintauchen in die virtuelle Realität den Benutzer der Realität soweit entrücken kann, dass die Gefahr besteht, dass er seine Orientierung verliert und daher in dem Ring gehalten werden muss.

In der US-A 6,135,928 wird offenbart, dass man neben dem Sehen und dem Bewegen auch das Hören und das Tasten, wie es in der Natur vorkommt in einer künstlich erzeugten Welt darstellen könne, aber keine natürliche Laufbewegung. Es wird deshalb ein Eingabesystem für eine virtuelle Realitätsanwendung vorgeschlagen, die einer Person eine annähernd natürliche Bewegung ermöglicht, indem sie auf einer sphärischen Kugel läuft, welche frei beweglich gelagert ist. Die Laufbewegung wird durch Sensoren erfasst und kann dem Benutzer mittels drahtgebundener Signalleitung via Computer über ein HMD dargestellt werden. In diesem Fall bewegt sich der Benutzer nicht in einem Ring, sondern er wird mit Hilfe von an einem Rahmen aufgehängten Gürtelsystemen, gesichert und kann dabei Horizontal- und auch Steigbewegungen auf einer schiefen Ebene mit den Beinen ausführen. Da sie in der virtuellen Welt laufen soll, hat die entsprechende Gestaltung der Vorrichtung zur Sicherung der Person mittels Gürtel und Hosenträger vertikale und horizontale sowie rotatorische Freiheitsgrade.

In ähnlicher Weise offenbart die US-A 5,490,784 eine Kugel zur Simulation einer Bewegung, allerdings soll sich der Benutzer in der Kugel aufhalten und in virtuelle Welt eintauchen. Er kann in der Kugel laufen oder Treppenstufen steigen und wird dabei über HMD oder einen Bildschirm visuell und akustisch informiert und beeinflusst. Für den Tastsinn ist eine interaktive Gestallt oder ein Gerät oder eine Schalttafel vorgesehen, das - im Falle der Gestalt - begrenzt an einer ringförmigen Führung in der Kugel und über entsprechende Gelenke auch rotatorisch beweglich gehalten ist. Dieses Gerät ist als Anwendungswerkzeug, zu betätigen durch die Hand des Benutzers, vorgesehen und die Handbewegung soll ein realistisches über das HMD darstellbares Gefühl vermitteln..

Aus der DE 19934913 A1 ist ein Verfahren zum Austragen von virtuellen Wettkämpfen über Telekomunikationsnetze bei dem mehrere Trainierende über Internet mittels Bildschirm verbunden sind. In dem virtuellen Raum befinden sich gegebenenfalls mehrere wettkampfwillige Sportler, z.B. Radfahrer, die sich über Sprachein- und -ausgabe sowie Videokamera und entsprechende Bildschirme mit einander verständigen können, z. B. über die Route eines Radrennens. Die Umgebung der Langstrecke kann aus einem zentralen Server abgerufen werden, um auf dem Bildschirm den Wettkampf realistisch darzustellen. Dazu werden Videoaufnahmen der Wettkämpfe in die Umgebung eingeblendet und die jeweiligen sportlichen Leistungen werden ausgewertet, um daraus die augenblickliche Situation im Feld für jeden Sportler zu ermitteln. Der Sportler trägt aber einen Helmbildschirm, die auch die Kopfbewegung erfasst z. B. wenn er sich umdreht und zusätzlich ist angegeben, dass Puls und Blutdruck erfasst werden können um eine spätere Auswertung zu ermöglichen oder eine Überbelastung sofort festzustellen.

Aus der DE 19909936 A1 ist eine Vorrichtung und ein Verfahren zur hochaufgelösten optischen Präsentation von Szenarien der virtuellen Realität darzustellen. Damit sollte die zeitaufgelöste Erfassung der Blickrichtung eines auf eine Anzeigeeinheit blickenden Beobachter erfasst werden, um den zeitlichen Verlauf eines kontinuierlichen Blickrichtungswechsels des Beobachters voraus zu bestimmen oder einen Blicksprung vorher zu sagen, damit soll versucht werden die Fläche auf der eine wechselnde Bildinformation darzustellen möglichst bald zu verringern, die Rechenleistung in Grenzen zu halten, bzw. die Geschwindigkeit bei gegebener Rechenleistung zu erhöhen.
Es braucht nicht mehr die gesamte sichtbare Fläche mit derselben Information gesteuert zu werden.

Aus der DE 197 49 136 A1 ist ein Verfahren und eine Vorrichtung zum Erfassen von Bewegungen dargestellt, wobei zur Bestimmung von zwei Farbwerten eines Punktes einer Szene durch Messen des Helligkeitswertespunktes im Schienenspektralbereich zwei Zeitpunkte bestimmt werden und über eine bestimmte Rechenhandlung dann festgestellt wird, ob sich das angepeilte Objekt bewegt. Damit kann der Aufwand zur Feststellung einer Bewegung minimiert werden und es können bestimmte Muster erkannt werden, unter Zuhilfenahme einer Vektordarstellung bzw. Vektorberechnung in einem kartesischen System oder einer beliebigen anderen Geometrie eines Vektorraumes.

Bei heutigen VR-Systeme wird der Anwender entweder nur auf wenige Wahrnehmungen beschränkt, er kann nicht völlig in die vom Computer generierte Realität eintauchen. Grund hierfür ist, dass die oben beschriebenen VR-Systeme wenige Sinneswahrnehmungen ansprechen. Das Balance-Beeinflussungssystem ist kompliziert und im Prinzip nur für medizinische Anwendung geeignet.
Die Systeme in denen der Benutzer auch seine Beine im Sinne einer Laufbewegung betätigt sind für ihn entweder unbequem oder technisch zu aufwendig.

Alle auf dem Markt befindlichen VR-Systeme können dem Anwender daher nur annähernd den Eindruck von realen Erlebnissen in einer virtuellen Welt vermitteln.
Gerade im Bereich der realitätsnahen Simulation wie beispielsweise bei Computerspielen oder im Simulationstraining ist man auf die Vermittlung absoluter Realitätsnähe angewiesen, um über die Imagination dem Anwender das Gefühl der realen Teilnahme am virtuellen Geschehen zu vermitteln.

Von daher liegt der Erfindung das Problem zugrunde, mit Hilfe eines VR-Systems den Benutzer in die virtuelle Umgebung zu integrieren durch Immersion, Interaktion und Imagination und dazu geeignete Systeme und Geräte für die private und kommerzielle Anwendung vorzuschlagen. Dabei sollen die Vorteile des Standes der Technik betreffend Rechnertechnik und Sensorik sowie Signalübertragung genutzt und die Systeme weiterentwickelt werden.

Das Problem wird erfindungsgemäß durch die Merkmale des Anspruchs 1, gelöst. Weiterbildungen der Erfindung sind in den Unteransprüchen erfasst.

Die Erfindung wird im folgenden im Zusammenhang dargestellt und näher erläutert unter Verweis auf erläuternde Tabellen.
- Tab. 1: Blockdarstellung einer Home-Anwendung eines Reality Simulation Systems (RSS);
- Tab. 2: Blockdarstellung einer Business-Anwendung eines Reality Simulation Systems (RSS);

Zunächst werden einige Begriffe erläutert, die im Zusammenhang mit der Erfindung benutzt werden.
Immersion (Eintauchen) in die virtuelle Welt bedeutet, dass dem Menschen durch seine Sinne das Gefühl vermittelt wird, in dieser Welt integriert zu sein.
Dabei beschränkte man sich häufig auf den visuellen-, akustischen und Tastsinn. Speziell für die jeweiligen Sinnesorgane entwickelte Geräte regen dabei den Sinn an.
Interaktion bedeutet, mit der virtuellen Umgebung kommunizieren und die darin vorkommenden virtuellen Objekte zu verändern bzw. zu benutzen.

Durch Imagination (die Vorstellungskraft) entsteht beim Benutzer das Erlebnis, Teil einer Welt zu sein, die in diesem Fall virtuell und nur im Computer existiert. Die Imagination ist in starkem Maße abhängig von der Qualität der Immersion und Interaktion.
Der Begriff Spiel wird als Synonym für ein Geschehen in der virtuellen Realität benutzt, da in der Praxis vieles spielend abläuft.

Die erste Lösung umfasst zunächst ein erfindungsgemäßes Virtuelle Realität System, im Folgenden wegen der Verbesserungen zu herkömmlichen Systemen als Reality Simulations System (RSS) bezeichnet. Dieses Reality Simulations System umfasst einen die mechanischen realen Systemgrenzen definierenden Bewegungskäfig mit mindestens einer Bodenplatte und mindestens zwei oberhalb der Bodenplatte aufragende Systemelemente von mehr als der Größe eines stehenden Benutzers, einen Bewegungsring mit rotatorischem Freiheitsgrad in mindestens einer Ebene am Bewegungskäfig, ein mittels Software gesteuertes Rechner-System für das Erfassen und Verarbeiten von mindestens Sinneseindrücken und Steuern des Systems sowie Eingabe- und Ausgabesystemteile, die mit dem Rechner und einem Benutzer des Systems, der sich im Bewegungskäfig aufhält, in Wirkverbindung stehen und wobei der Bewegungsring mit dem Bewegungskäfig und dem Benutzer koppelbar ist. Mindestens eines der aufragenden Systemelemente kann zugleich als Trägerelement für ein Sensorfeld dienen wie dies aus der Zeichnung und deren Beschreibung deutlich wird.
Soweit im zur Erfindung Software beschrieben wird ist diese beispielhaft genannt und auf den heutigen Standard bezogen mit allgemein üblichen ETC Treibern.

Das RSS ist die konsequente Weiterentwicklung der bisherigen Virtuelle Realität Systeme, sowohl in der Anwenderhardware als auch deren Verknüpfung zu mechanischen und elektronischen Funktionseinheiten.
Das erfindungsgemäße RSS ist ein Anwendungssystem ist in seinen Varianten in den Tab. 1 und 2 dargestellt. Der Unterschied liegt vorwiegend in der Komplexität von Hard- und Software mit entsprechend unterschiedlichem Kostenaufwand.
Die Erfindung beseitigt die Mängel der bisherigen VR-Systeme.
Mit Hilfe eines RSS-Home Portable und einer RSS Business Station wird virtuelle Realität nahezu für jeden Anwendungszweck möglich.
Die Homevariante des RSS als tragbare Ausrüstung verfügt über eine derart konzipierte Software-Steuerung, die es ermöglicht, das Gerät an viele gebräuchliche PC und Spielkonsolen anzuschließen, während die Business-Variante vorwiegend als ortsfeste Einrichtung ausgestattet ist.

Entgegen den meisten bisherigen VR-Systemen ist der Benutzer mit der Erfindung nicht auf wenige Sinnes-Wahmehmungen beschränkt. Auch die Einbindung von Bewegungsmöglichkeiten wie Laufen, Springen, Hocken und um 360 Grad Drehen ist für den Benutzer neben Arm- und Kopfbewegungen möglich und simulierbar, in einem Bewegungsraum, in einem festen System, und dabei kann er durch komplexe Bewegungsabläufe steuernd am Geschehen teilnehmen.

Damit wird die virtuelle Welt der Computerprogramme wird zu einem realen Erlebnis, da mit dem RSS neben Hören, Sehen, Fühlen bzw. Tasten, Bewegen gegebenenfalls auch Riechen, der Gleichgewichtssinn bei Bewegung in der Ebene angesprochen und über eine Kombination von Soft- und Hardware, sowie neuen mechanischen und elektronischen Geräten erlebbar gemacht wird.
Dem Benutzer wird beispielsweise ermöglicht, durch das RSS aktiv an Computeractionspielen die auch Beinarbeit erfordern teilzunehmen. Er wird als Spielbenutzer aus der bisherigen passiven Steuerungsfunktion integrierter Bestandteil des Spiels. Seine Bewegungsabläufe können unmittelbar die Bewegungs- und Szenensequenzen des Spiels beeinflussen.

Das RSS ist durch die Kopplung von mechanischen und elektronischen Steuerungselementen gekennzeichnet, wobei jedoch ausgewählte einzelne mechanische Elemente durch elektrische oder elektronische Steuerungselemente vom Fachmann austauschbar sind. Das RSS unterscheidet sich in erster Linie von den gängigen VR-Systemen dadurch, daß es dem Benutzer ermöglicht, alle natürlichen Bewegungsabläufe innerhalb einer vom Computer generierten Umgebung durchzuführen. Seine Bewegungen beeinflussen steuernd die virtuelle Realität (feed back) und daher kann er sich innerhalb der virtuellen Umgebung wie in seiner natürlichen Umgebung bewegen.

Die neuen Systemteile beziehen sich auf
- eine im wesentliche ebene Bodenfläche mit beweglichen Teilen oder einer solchen beweglichen Fläche insgesamt, ermöglichen eine aktive oder passive Bewegung des Benutzers in der Ebene;
- Hocken, Springen oder Bewegen anderer Körperteile bzw. deren relative Positionsänderung im Bewegungskäfig werden durch ein System aus 3 D Sensoren und Empfänger registriert;
- Armbewegungen werden zusätzlich durch ein Anwendungswerkzeug registriert;
- Drehbewegungen des Körpers und / oder des Kopfes werden durch den 3 D Sensor und über den Bewegungsarm in Verbindung mit einem Bewegungsring registriert.

Die zweite Lösung der Erfindung bezieht sich auf spezielle Schuhe, die Fun Boots. Sie ermöglichen eine Laufsimulation, welche Belastungs- und Positionssignale generiert während die dritte Lösung sich auf die Integration einer gekrümmten Videowand in das RSS bezieht.
Der Benutzer wird im System durch eine flexible Verbindung eines Gürtels, vorzugsweise mittels daran gekoppelter Fixierfedem, mit dem Bewegungsring in dem System stabilisiert, ohne dass dadurch seine Bewegungsabläufe beeinträchtigt werden. Hierdurch erhält der Benutzer die Sicherheit einer stabilen Position innerhalb des RSS und kann sich voll und gefahrlos auf die, auch noch so rasante virtuelle Anwendung konzentrieren.
In der mechanischen Ausführung des RSS, gibt eine mechanische Kopplung des Anwendungswerkzeuges über den Bewegungsarm mit dem Bewegungsring dem Benutzer die Möglichkeit sich "festzuhalten" und somit ein zusätzliches Gefühl der Sicherheit. Das Anwendungswerkzeug, je nach Anwendung modifiziert, ermöglicht dem Benutzer eine tatsächliche mit der ihm gewohnten Verwendung vergleichbare Bewegung bzw. Benutzung, beispielsweise eines Gewehrs oder Schraubenschlüssels. Anstelle der mechanischen kann aber auch eine drahtgebundene oder funktechnische Anbindung des Werkzeuges erfolgen.

In der Business-Version wird die Videobrille durch ein in der oberen Hälfte des RSS angebrachten Plasmamonitor oder eine Videowand ersetzt. Dieser wölbt sich maxiamal um 360° um die Bodenplatte bzw. der Anwendungsfläche im RSS. Die Kopfhörer und das Mikrophon werden durch entsprechende externe Geräte ersetzt, z.B. einer Freisprechanlage ähnlich.

Um dem Benutzer ein Maximum an Sicherheit zu gewährleisten, ist als Zusatzgerät ein Vitalfunktionsüberwachungssystem vorgesehen. Die Aufgabe dieses Gerätes liegt in erster Linie in der Überwachung der Vitalfunktionen des Benutzers. Gelangt ein physiologischer Wert des Körpers in einen kritischen Bereich wird die Anwendung automatisch beendet. Ein Nebeneffekt dieses Systems ist auch die durch Dritte verfolgbare Wiedergabe der Aktionen des Benutzers mittels Monitor.

Das Reality Simulations System besteht aus mehreren einzelnen Soft- und Hardwarekomponenten, die elektronisch an einen Server gekoppelt, eine System-Einheit bilden. Dazu wird beispielsweise am Rechner die serielle Schnittstelle zur Ankopplung vom Bewegungsarm und Bewegungsring; der ComPort für die Ankopplung von Positionssensoren; der Mausport für die Anbindung der Schuhe / Fun Boots genutzt und die Grafikkarte steuert die Videobrille an; Mikrofon und Sounds werden über die Soundkarte des Rechners verarbeitet.

Das RSS erreicht die vollständige Manipulation des Benutzers, also die Immersion, durch das softwaregesteuerte Zusammenspiel der Systemelemente: Bewegungskäfig, z.B. eine Edelstahlrahmenkonstruktion, Bewegungsring, Gürtel mit Fixierung am Bewegungsring, Fun Boots, Bewegungsarm, Anwendungswerkzeug mit den elektronischen Anwendungsgeräten Videobrille, Kopfhörer, Mikrophon, 3D-Sensoren.
Dem Benutzer ist es möglich, innerhalb der computergenerierten Wirklichkeit seine natürlichen Bewegungsabläufe beizubehalten, auch entsprechen die anderen virtuell erzeugten Sinnesempfindungen annähernd seinen gewohnten Empfindungen.

Einige der Geräte für Eingabe und Ausgabe von Signalen, die menschliche Sinne erfassen können für Bilder, Geräusche, Gerüche, Temperatur etc. wurden bereits im Prinzip im Stand der Technik beschrieben; sie sind hier auch anwendbar, gegebenenfalls angepasst an das erfindungsgemäße System.

An einer visuellen Einrichtung wie eine Videobrille oder ein HMD werden z.B. zusätzlich ein paar Dolby-Surround-Kopfhörer und ein Mikrophon befestigt. Am Halteclip der Videobrille ist ein 3D-Positions-Sensor befestigt.
Die Video-Einrichtung ist beispielsweise mit einem hochauflösenden TFT Bildschirm wie er heute bei hochwertigen Rechnereinrichtungen Verwendung findet, ausgestattet. Je größer die Auflösung, desto realistischer ist die Illusion, sich in einer anderen Welt zu befinden.
Die Illusion wird durch gute 3D-Surround-Kopfhörer weiter verstärkt, damit die Laute aus allen Richtungen zu kommen scheinen. In Verbindung mit dem Mikrofon werden eigene Laute des Benutzers verstärkt wiedergegeben, z.B. Hecheln, Schreien, Stöhnen und mündliche Steuerungsbefehle.

3D-Positions-Sensoren, an einem oder mehreren Körperteilen des Benutzers angebracht, senden Signale an am Bewegungskäfig, z.B. einer Metall- oder Kunststoffbox mit Eingangstor, oberhalb des Kopfes des Benutzers befindliche Empfänger. Beim Betreten des Systems erfasst der Empfänger die Größe und die Position des Benutzers. Anhand dieser Daten und weiterer übermittelter Signale kann der Computer die aktuelle genaue Position, auch beim Springen, Ducken oder auch die Kopfbewegungen wie rauf, runter, links oder rechts errechnen und visuell über die Videobrille wiedergeben, vorzugsweise als Relativposition innerhalb einer visuell übermittelten, auch wechselnden virtuellen Umgebung oder Horizontes des Benutzers. Diese Methode ermöglicht eine exakte Darstellung der Sichtbewegung.

Ein Bewegungskäfig wie eine Edelstahlrohr- oder Gitterkonstruktion, vorzugsweise auf einer Bodenplattform angeordnet, bildet in der mechanischen Variante des RSS die äußere Systemgrenze. Neben der notwendigen funktionellen Verwendung - Unterbringung der Hardware Energieversorgung und Befestigung von mechanischen und elektronischen Steuerungselementen - hält der Käfig den Benutzer innerhalb des Systems. Alternativ ist ein Käfig aus Blech- oder Kunststoffwänden denkbar, die bei einer Portable Version zusammen gefaltet werden können.
Der sich innerhalb der computergenerierten Umgebung befindliche Benutzer kann dann auch bei noch so abenteuerlichen Anwendungen nicht aus dem System stürzen und sich dabei Verletzungen zuziehen.

Der Gürtel dient zur Bewegungsbegrenzung des Benutzers (Fixierung innerhalb des Systems) und als Verbindung zwischen dem Computer und den einzelnen Komponenten. An ihm sind elektromechanische Steckbuchsen für die Videobrille, das Mikro, den Kopfhörer und das Anwendungswerkzeug angebracht. An drei Halteringen werden die Fixierfedern befestigt. Über eine Fixierfeder wird ein Kabel zum Computer geführt mit den Endungen Gamekontroller, Soundstecker und Monitorstecker. Die Fixierung des Benutzers wird durch die mechanische Verbindung des Gürtels mit einem Bewegungsring erreicht, die allerdings z.B. über Federn elastisch Spielraum gewährt.

Der Bewegungsring ist eine vorzugsweise kreisförmige, an den äußeren Käfig-oder Rahmenkonstruktionen befestigte Laufschiene. Er ist mindestens horizontal um 360° bewegbar aufgehängt und ist auch im geringen Umfang in zwei Achsen beweglich. Er hat die Funktion, den Benutzer im System Steuerbewegungen des jeweiligen Anwendungswerkzeuges nach rechts und links und / oder oben und unten ausführen zu lassen. Diese Steuerungsimpulse werden durch eine vorzugsweise starre Verbindung mit einem Bewegungsarm, häufig gekoppelt oder Teil des Anwendungswerkzeuges, auf den Bewegungsring übertragen.

Der Bewegungsarm ist in einer Ausführungsform ein mechanisches Verbindungselement zwischen Bewegungsring und Anwendungssystem oder Anwendungswerkzeug oder dieses Werkzeug selbst. Das am Bewegungsarm befestigte Anwendungswerkzeug ist mittels Gelenke in begrenztem Maße nach vorne und nach hinten sowie hoch und runter zu bewegen. Statt mechanischer Ankopplung des Werkzeuges oder Armes an den Bewegungsring, kommt auch eine direkte Ankopplung an den Käfig infrage unter Wegfall des Bewegungsringes, sofern der Käfig selbst eine Beweglichkeit des Werkzeugs nach Art eines Bewegungsringes zuläßt oder so geformt ist.
Außerdem kann in einer anderen Ausführungsform der Bewegungsarm oder das Werkzeug elektrisch, funktechnisch oder optisch statt mechanisch gekoppelt sein.

Als Werkzeug für Actionspiele wird beispielsweise eine virtuelle Waffe verwendet, die der Benutzer allerdings realistisch auch in der Hand hält. Anhand eingebauter Druckknöpfe können Aktionen ausgeführt werden: Nachladen, Waffenwechsel, Menüsteuerung des Rechnersystems oder Spielprogramms. Ein am Lauf der Waffe angebrachter Sensor ermöglicht über einen Empfänger eine genaue Positionierung eines Mauszeigers oder Zielkreuzes innerhalb des visualisierten Spielbildes oder der Menüsteuerung. Das Anwendungswerkzeug wird vorzugsweise über ein Kabel oder auch drahtlos mit dem Gürtel signaltechnisch verbunden.
Als Werkzeug kann allgemein ein echtes Werkzeug oder Bedienelement Verwendung finden, das eine entsprechende signaltechnische Kopplung zum System hat. Dies ist z.B. sinnvoll wenn Handgriffe für das Arbeiten in Räumen geübt werden müssen, die von Menschen nur kurz betretbar sind. Beispiele: Reparatur in Kernkraftwerken unter variabel simulierten Umgebungseinflüssen wie Hitze, Sichtbehinderung durch Rauch etc.; Bergungen in Schiffen unter Luftnot, Orientierungsproblemen oder ähnliches.

Ein Eingabe-Gerät ist der erfindungsgemäße Schuh mit einer Funktion nach Art einer Maus. Die Umsetzung der Bewegung der Fun Boots im Reality Simulations System erfolgt über mehrere in der Unterseite oder Sohle eingesetzte Kugeln oder Rollen als Sensoren der Fußbewegung. Diese Kugeln übertragen die Bewegungsrichtung z.B. auf zwei Andruckrollen. Die Bewegung dieser Rädchen wird in elektronische Impulse umgewandelt. In der mechanischen Variante kann dies durch Öffnen und Schließen eines elektronischen Kontakts über ein Zahnrad erfolgen. Bei der opto-elektronischen Variante wird dies z.B.verschleißfrei über eine Lichtschranke realisiert.
Signale werden über Kabel, IR-Schnittstelle oder funktechnisch an den Rechner übermittelt. Eine verwendbare Technik von einer optischen Funk-Maus mit Akku-Betrieb liefert z.B. die Firma Anubis Electronic GmbH, DE unter der Bezeichnung Typhoon Unplugged Mouse Art. 40159.
Anstelle eines beschriebenen Sensors im Schuh kann natürlich auch die Plattform unter einem Benutzerschuh entsprechende Sensoren für die Laufbewegung des Benutzers oder dessen Belastung aufweisen.

Die Bodenfläche des Käfigs hat vorzugsweise eine zylindrische Form. Sie kann auch beweglich gestaltet sein. Der Raum darunter dient zur Unterbringung der Steuerungshardware und in der Portable-Variante als Staufläche für Rahmenkonstruktionen. Die begehbare Oberfläche ist je nach Ausführung auch aus verschieden Materialen gefertigt. Soweit dieser Fläche eine Steuerungsfunktion zugeordnet wird z.B. Positionsbestimmung der Fußstellung des Benutzers, sind in dieser Fläche auch entsprechende Sensoren untergebracht.

Die Software wird neben den üblichen Hardware-spezifischen Betriebssystemen als Treiber für beispielsweise einen Gamekontroller installiert und die einzelnen Komponenten des Anwendungswerkzeuges wie Waffen werden entsprechend ihrer Funktion konfiguriert. Das System ist somit für fast alle Actionspiele einsetzbar. Die Treibersoftware ist zu DirectX, DiirectDraw und Direct 3D kompatibel. Diese Software war dargestellt im internet am 10.08.2001 um 14.21 Uhr unter http://www.gamedev.net/reference/programming/features/d3dol. Die Steuerung während des Spiels kann durch eine Sprachsoftware erfolgen.

Durch die Leistungsfähigkeit heutiger Computersysteme ist es möglich, das Reality Simulations System an jedem Homecomputer anzuschließen. Eine Mindestanforderung ist jedoch unumgänglich, um die komplexen 3D Berechnungen und Darstellungen zu bewältigen. Eine gute Soundkarte sorgt für echten Raumklang in Verbindung mit guten 3D Surround Kopfhörern.
Als Mindestanforderung für das Rechnersystem umfasst die Hardware neben üblicher Ausstattung einen Intel-Pentium II 350 MHz;128 MB RAM-Speicher; 64 MB RAM 3D Grafikkarte, beispielsweise eine Grafik-Karte des Typs 3D Prophet II GTS der Firma Guillemot GmbH, Neunkirchen im Sand, DE sowie eine 3D Soundkarte.

Die Anwendung der erfindungsgemäßen RSS-Systeme kann sich an den Stand-der-Technik-Anwendungen orientieren und erweitert die Möglichkeiten der etablierten Anwendungen sowohl im industriellen, medizinischen, wissenschaftlichen als auch im privaten Bereich.

In einem Ausführungsbeispiel wird die Erfindung anhand einer schematischen Zeichnung erläutert. Es zeigen:

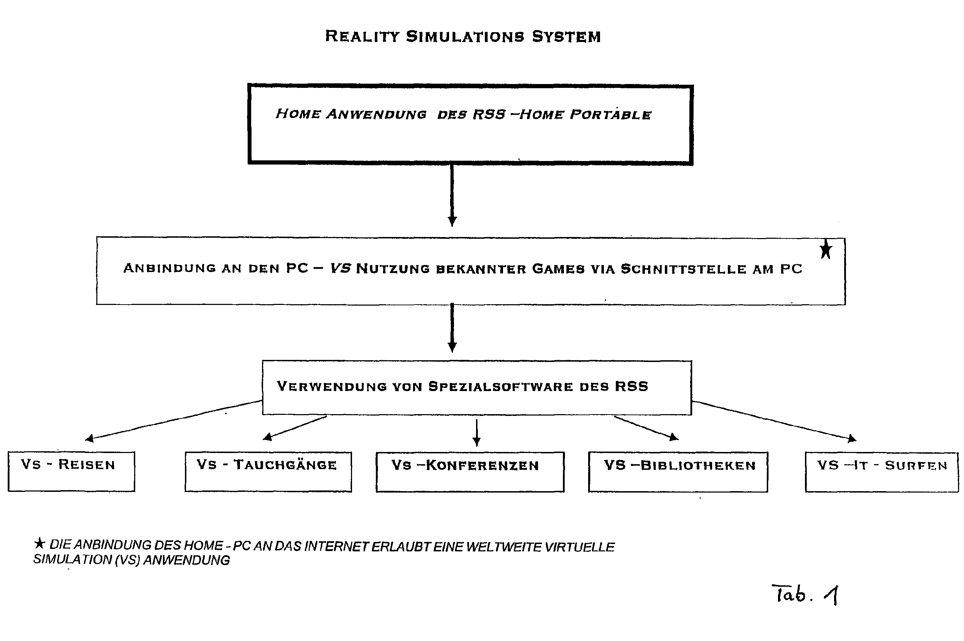

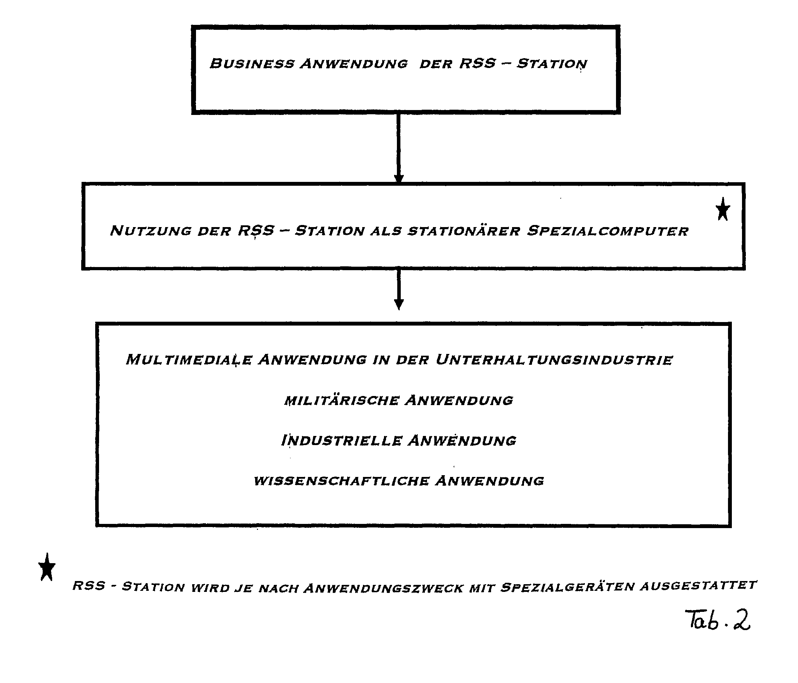

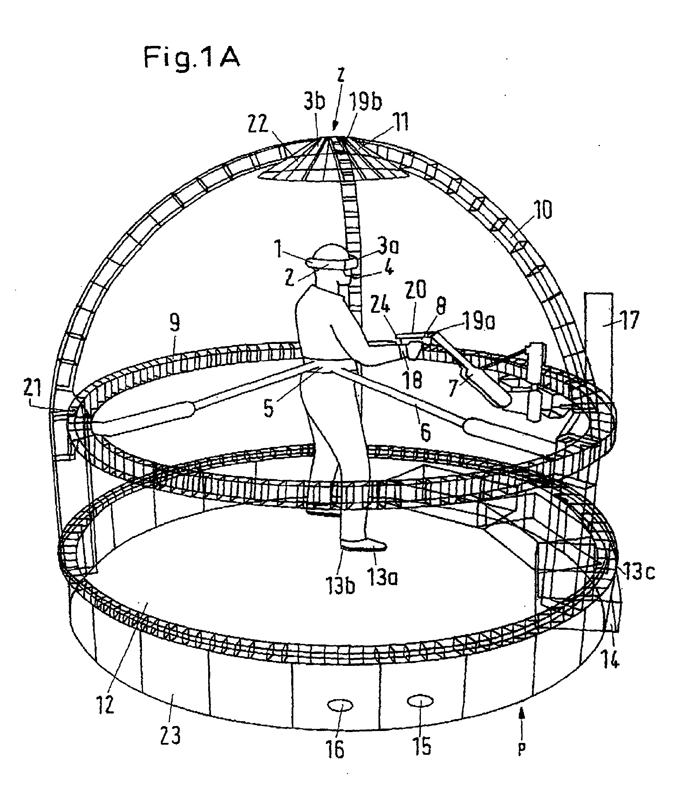

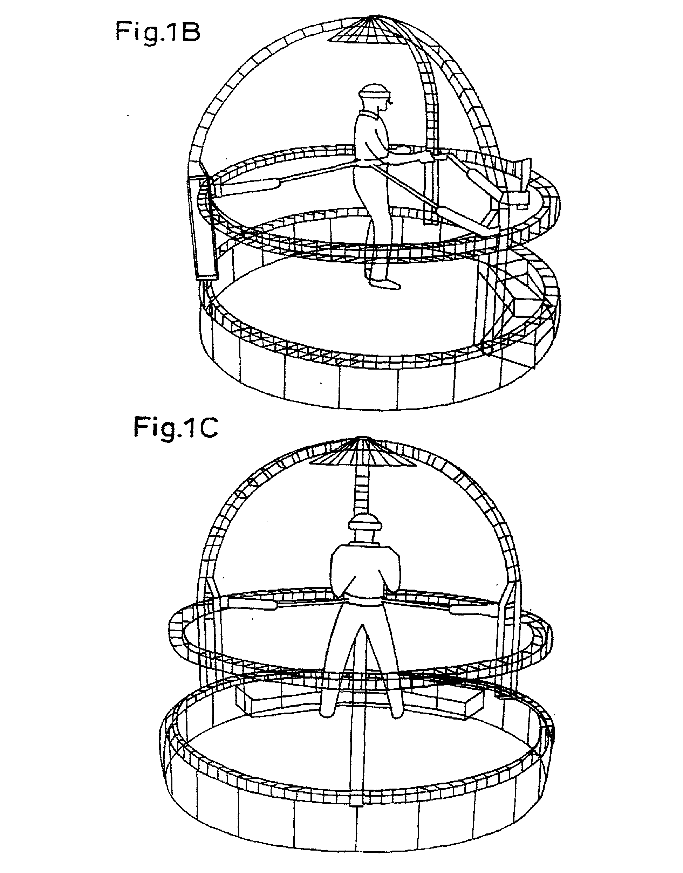

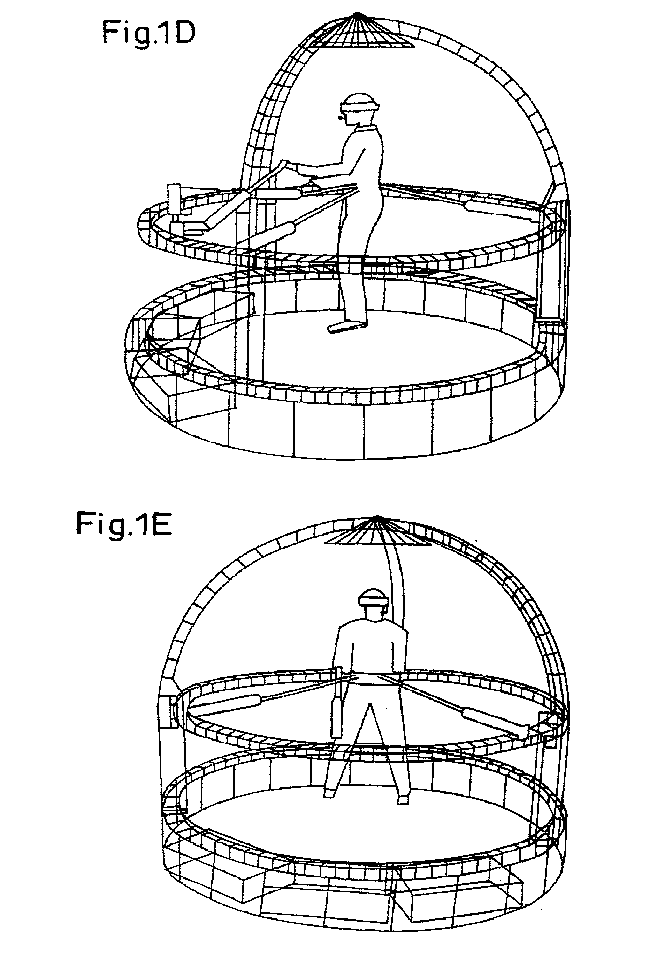

- Fig. 1 a: einen Bewegungskäfig über einer Bodenplatte, auf der ein Benutzer steht;
- Fig. 1 b,c,d,e: den Benutzer in vier um 90° versetzten Positionen, beginnend bei der Position gemäß Fig. 1 a ;
- Fig. 2a: einen Abschnitt des Käfigs gemäß Figur 1a mit Teilen der Plattform für den Benutzer;
- Fig. 2b,c: zwei weitere Ausführungsformen der Bodenplatte;
- Fig. 3: ein weiteren Abschnitt des Käfigs gemäß Figur 1 mit Gestänge über dem Benutzer;
- Fig. 4: einen Bewegungsring gemäß Figur 1 in dem der Benutzer mit Hilfe eines Gürtels locker geführt wird;
- Fig. 5: ein HMD-Gerät, Benutzung durch eine Person gemäß Figur 1;
- Fig. 6a,b: ein erfindungsgemäßer Schuh in zwei Varianten mit Kugeln und Rollen sowie dessen Signalweg.

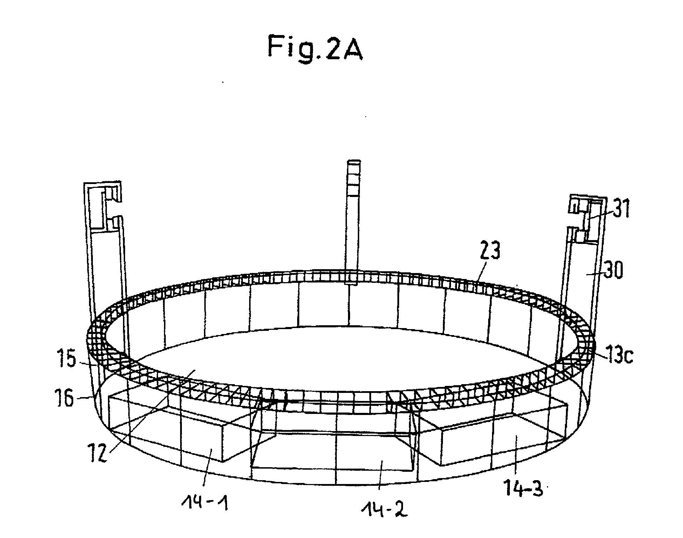

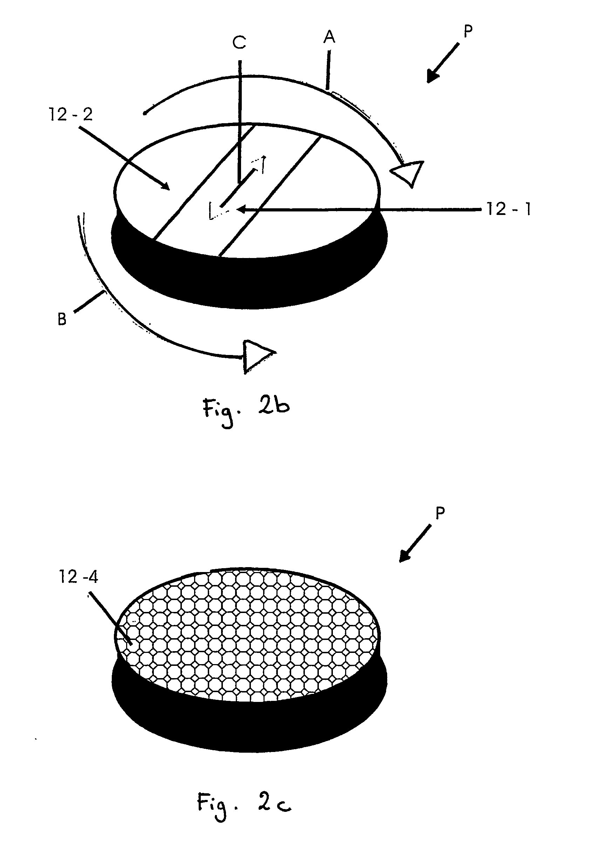

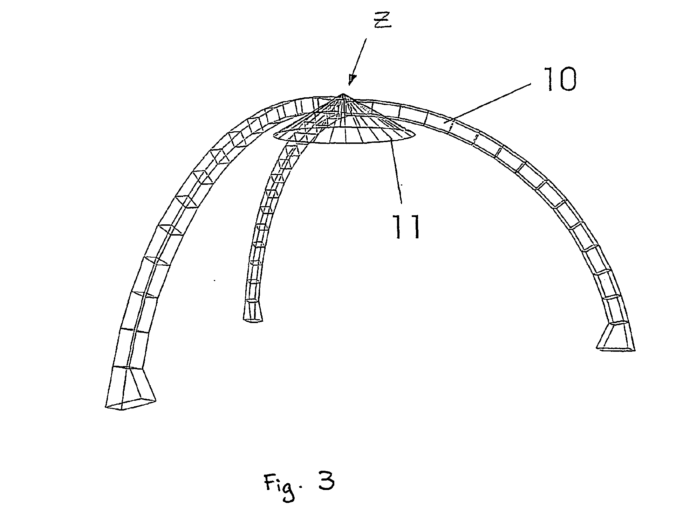

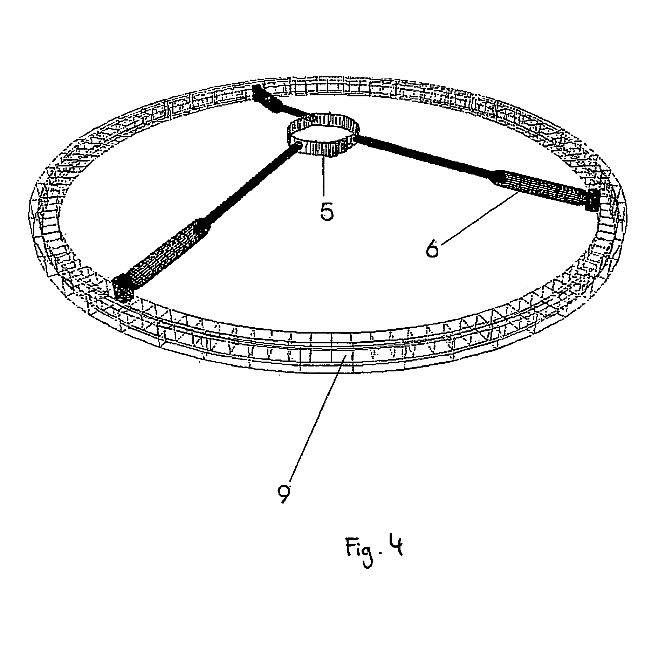

In Fig. 1 ist ein Benutzer des Systems zur Darstellung der virtuellen Realität auf einer Plattform P innerhalb einer eines käfigartigen Gestänges 10 gestiegen.
Das Gestänge wölbt sich halbkreisförmig über dem Benutzer und es besteht in diesem Falle aus einem dreiteiligen Gitterwerk, das im Zenit Z über dem Benutzer oder der Mitte der Plattform P im Punkt Z zusammentrifft. Der Benutzer ist innerhalb dieses Käfigs und auf der Plattform anfangs mittig in einem Bewegungsring 9 positioniert, in dem er über nachgiebige Fixierfedern 6 , die in einem Gürtel 5 an seinem Körper enden gekoppelt. Dreht sich der Benutzer, so kann der Ring 9 sich mitdrehen, da der Ring in Lager 31 der Stützen 30 für das Gestänge 10 rotatorisch beweglich gelagert ist.
Der Ring 9, die Fixierfedern 6 und der Gürtel 5 sind in Figur 4 separat dargestellt, ebenso des den Benutzer überspannende Gewölbe bzw. Gestänge 10 in Figur 3 und Teile der Plattform P mit den Stützen 30 in Figur 2a, b, c. Der Benutzer selbst wird über ein Werkzeug oder Anwendungswerkzeug 8, beispielsweise ein Lasergewehr über einem beweglichen Arm 7 mit dem Ring 9 und damit mit dem Gesamtsystem gekoppelt.

Wie in Figur 1 b, c, d, e mit den vier geschwenkten Positionen dargestellt, hat der Benutzer damit Bewegungsfreiheit, sich beispielsweise um sich selbst zu drehen, wobei er jedoch das Anwendungswerkzeug mit sich führt, um die Bewegung auf den Ring 9 zu übertragen. Die Plattform selbst besteht aus einer Ebene, die als fixe platte ausgebildet sein kann, jedoch auch als bewegliche Scheibe oder in anderer Art und Weise beweglich gehalten sein kann.

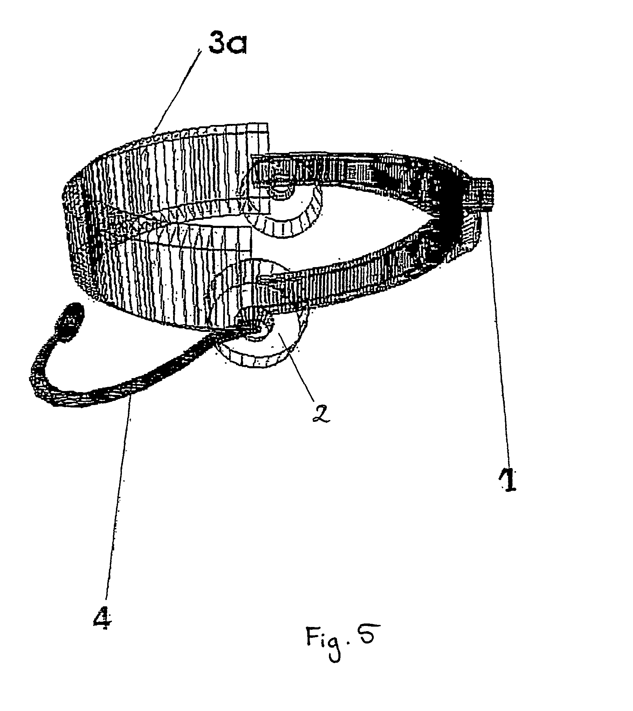

Unter der Plattform P der Bodenplatte 12 sind generell mit 14 bezeichnete Staufächer untergebracht, beispielsweise Computerhardware im Staufach 14-1, Computerzubehör oder für den Benutzer manuell verwendbares Zubehör im Staufach 14-2 und das Staufach 14-3 ist vorgesehen, beispielsweise für die Unterbringung des zerlegbaren Gestänges 10 und/oder des Ringes 9, sowie der Federn 6 und des Gürtels 5, wodurch wie in der Figur 2a dargestellt, die gesamte Plattform lediglich aus den Staufachelementen hinter der Verkleidung 23 unter der Bodenplatte 12 und den Stützen 30 besteht, die ihrerseits auch noch eingeklappt werden können, um so die Plattform als Transportelement für das Gesamtsystem zu benutzen, wenn es ein nicht ortsfestes System sein soll. Die Computerhardware, die über einen Netzanschluß 16 verfügt für die externe Stromversorgung, ist mit verschiedenen Anschlußbuchsen 15 versehen, die der Einspeisung und Ankopplung verschiedener Signale von Sensoren und Überwachungseinrichtungen dienen, welche ortsfest an dem Gesamtsystem angebracht sind oder vom Benutzer getragen werden.
Zu diesem System gehört einerseits ein Vitalüberwachungsmonitor 17, mit dem eine dritte Person eine Überwachung der Lebensfunktionen des Benutzers vornehmen kann oder von dem aus dem Benutzer über ein HMD, was in Figur 5 dargestellt, übermittelt werden können.
Fig. 1 a zeigt weiterhin ein HMD mit einem 3D-Sensor, 1 als Sender ausgebildet für einen Empfänger 22 im Zenit des Gestänges 10, kann Kopfbewegungen sensieren. Eine Videobrille 3 A kann von einem Sender 3 B im Zenit des Gestänges mit dem entsprechenden Bildmaterial beaufschlagt werden, während ein Mikrofon 4 Geräusche des Benutzers aufnimmt und über Rückkopplungen und Einblendungen entsprechende Reaktionssignale (feed-back) an den Benutzer Geräusche widergeben und verstärken oder an andere Spieler übermitteln kann. An dem Sensorenfeld 11 im Zenit des Gestänges können noch weitere Sensoren angebracht werden, zum Beispiel der Sensor 19 B als Empfänger von Bewegungsinformationen des 3D-Sensors 19 A im Bereich der Hand des Benutzers bzw. am Anwendungswerkzeug durch optische Sensoren 21, über einen Kontaktschalter 24 im Anwendungswerkzeug, ein Pulsmessgerät 18 beim Benutzer sowie Sensoren 13 an der Fußbekleidung 13 A des Benutzers vervollständigen die Sensoreinrichtung, mit der Signale vom Benutzer ausgehen bzw. Signale dem Benutzer übermittelt werden können. Die Fußbewegung, insbesondere von einem Sensor 13 B auf einem Empfänger 13 C in einer der Stützsäulen 30 des Systems, können per Funksignal oder Lichtsignal übermittelt werden, um sodann in virtueller Realität die entsprechende Feed-back-Information dem Benutzer zuzuführen.

Zwei Beispiele von Plattformen P sind in Fig. 2b und 2c dargestellt: In Fig. 2b ist die Bodenplatte 12-2 auf einer Basis P angeordnet und mit einem Laufband 12-1 ausgerüstet, das in einem um 360° beweglichen System, hier durch Pfeile A, B für beispielsweise jeweils 180° dargestellt, gefasst ist. Die horizontale Bewegung (Pfeil C) des Laufbandes 12-1 kann auch parallel mit der Bewegung des Bewegungsrings gekoppelt sein. Die horizontale Bewegung der Bodenplatte kann durch an der Innenseite angebrachte elektrische oder elektromechanische Antriebe in die gewünschte Bewegung versetzt. Die Laufbewegungen des Benutzers werden durch das Laufband ermöglicht. Selbstverständlich kann das Laufband auch noch in Schräglage sich befinden, um dem Benutzer eine Steigung zu simulieren.
In Fig. 2c ist die Bodenplatte 12-4 mit beweglichen Elementen wie Kugeln, Rollen oder ähnlichem auf der Oberfläche besetzt, die dem Anwender Laufbewegungen ermöglichen.

Fig. 3 zeigt das bereits erwähnte Gestänge 10, hier aus drei Teilen bestehend, die im Zenit Z verbunden sind und dort das Sensorenfeld 11 haltern. Fig. 4 stellt in isolierter Darstellung nochmals den Bewegungsring 9 mit den Koppel-Federn 6 für einen vom Benutzer tragbaren Gürtel 5 dar.
Fig. 5 schließlich zeigt schematisch ein HMD mit Videobrille 3a, Kopfhörern 2 und Sensor 1 sowie Mikrofon 4.

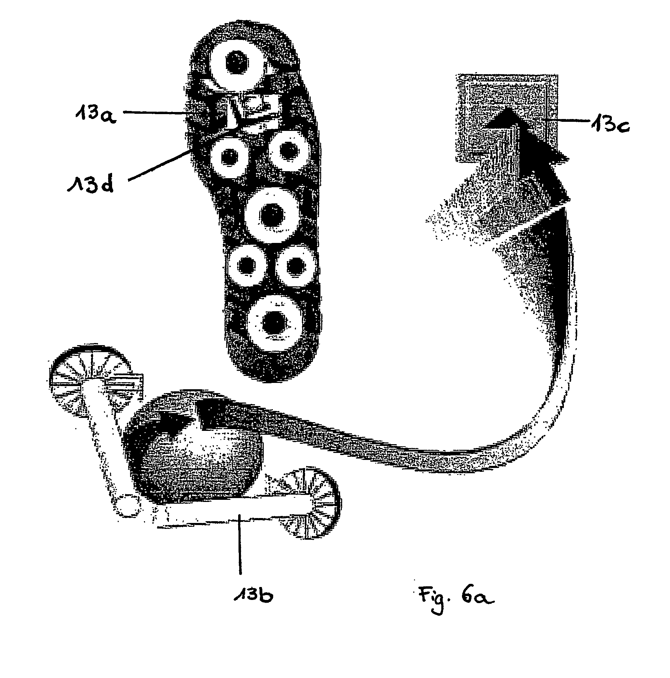

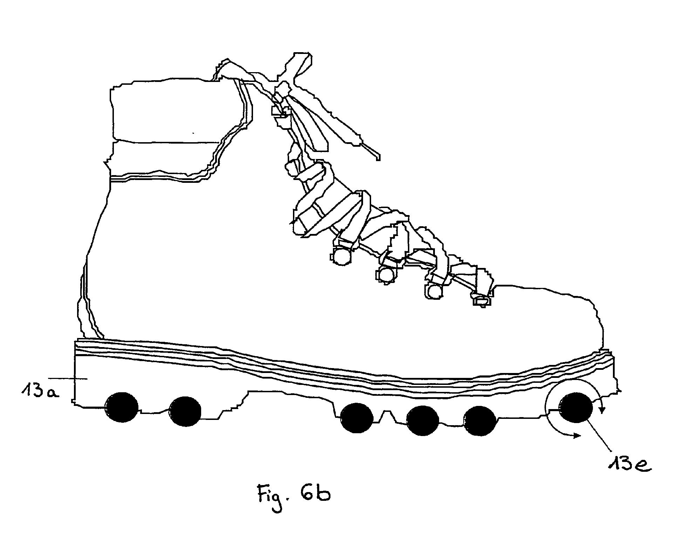

Ohne dies im Detail darzustellen ist klar und aus Fig. 6a, b ersichtlich, dass die Fußbekleidung 13a nach Art einer Maus mit mechanischen, magnetischen oder optischen Elementen wie Kugeln 13d, oder Rollen13 e zur Erfassung der Bewegung des Fußes ausgestattet sein kann und die Bewegung sowohl über Signalgeber 13b mittels Leitungen am Benutzer, dessen Gürtel 5, die Fixierfedern 6, den Bewegungsring 9 und über weitere geeignete Systeme durch die Stützen 30 zu der Hardware im Staufach 14-1 geleitet werden. In gleicher Weise kann natürlich auch eine Infrarot-Schnittstelle oder eine Funkschnittstelle in der Fußbekleidung 13 A enthalten sein, um Bewegungssignale an entsprechende Empfänger 13c im System zu leiten. Die Sensoren in der Fußbekleidung kann auch andere Sensoren, wie zum Beispiel Schweißsensoren enthalten, um die Arbeit des Fußes an das System zu übermitteln und dem Benutzer ein Feed-back zu geben.
Das System kann auch so funktionieren, dass die Sensoren nicht im Schuh sondern innerhalb der Plattform 12 untergebracht werden und von entsprechenden Kontakten an den Fußbekleidungen 13 A über die Plattform Druckinformationen, Standortinformationen und Bewegungsinformationen an das System weitergebenen wird.

Im folgenden wird nun dargestellt, wie verschiedene Bewegungsinformationen im System sensiert, der Hardware zugeleitet und an die Bedienperson zurückgegeben wird bzw. im Rechner verarbeitet wird. Ebenso werden die Funktion und Art des Anwendungswerkzeuges und die im laufenden Zusammenhang befindlichen Zubehörteile oder Vorrichtungen in ihrer Funktion dargestellt.

### Kopfbewegung

Bei der Kopfbewegung des Anwenders, sendet der 3D Positionssensor 1 (Sender) an den 3D Positionssensor 22 (Empfänger) Bewegungssignale des Kopfes. Der 3D Positionssensor 22 ( Empfänger) im Sensorenfeld 11, sendet über ein Datenkabel, das vom Sensorenfeld 11 im Inneren des Gestänges 10 über den Standfuß 30 verläuft, ein Steuerungssignal an den Computer. Der Computer sendet eine in Echtzeit errechnete 3D Bildsequenz als Signal über die Grafikkarte 25 an den Sender der Videobrille 3b. Der Sender der Videobrille 3b sendet die Bildsequenz mit einer Sendefrequenz von 2.4-2.4835 GHz an den Empfänger der Videobrille 3a, z.B eine Brille des Typs Eye-Trek FMD700 der Firma Olympus Optical Co. (Europa) GmbH, DE. Die Bildsequenz wird in Echtzeit angezeigt. Der Anwender bewegt seinen Kopf im Virtuellen Raum.

### Hockbewegung

Bei der Hockbewegung des Anwenders, sendet der 3D Positionssensor 1 (Sender) an den 3D Positionssensor 22 (Empfänger) Entfernungssignale des Kopfes. Der 3D Positionssensor 22 ( Empfänger) im Sensorenfeld 11, sendet über ein Datenkabel, das vom Sensorenfeld 11 im inneren des Gestänges 10 über das Teil 23 verläuft, ein Steuerungssignal an den Computer. Der Computer sendet eine in Echtzeit errechnete 3D Bildsequenz als Signal über die Grafikkarte 25 an den Sender der Videobrille 3b. Der Sender der Videobrille 3b sendet die Bildsequenz mit einer Sendefrequenz von 2.4-2.4835 GHz an den Empfänger der Videobrille 3a. Die Bildsequenz wird in Echtzeit angezeigt. Der Anwender bewegt sich in die Hocke im Virtuellen Raum.

### Sprungbewegung

Bei der Sprungbewegung des Anwenders, sendet der 3D Positionssensor 1 (Sender) an den 3D Positionssensor 22 (Empfänger) Annäherungssignale des Kopfes. Der 3D Positionssensor 22 ( Empfänger) im Sensorenfeld 11, sendet über ein Datenkabel, das vom Sensorenfeld 11 im Inneren des Gestänges 10 verläuft, ein Steuerungssignal an den Computer. Der Computer sendet eine in Echtzeit errechnete 3D Bildsequenz als Signal über die Grafikkarte 25 an den Sender der Videobrille 3b. Der Sender der Videobrille 3b sendet die Bildsequenz mit einer Sendefrequenz von 2.4-2.4835 GHz an den Empfänger der Videobrille 3a. Die Bildsequenz wird in Echtzeit angezeigt. Der Anwender bewegt sich in die Höhe im Virtuellen Raum.

### Hand / Armbewegung

Bei Bewegungen des Anwendungswerkzeuges 8 wird über den 3D Positionssensor 19a (Sender) ein Steuerungssignal an den 3D Positionssensor 19b ( Empfänger) im Sensorenfeld 11 gesendet. Der 3D Positionssensor 19b im Sensorenfeld 11, sendet über ein Datenkabel, das vom Sensorenfeld 11 im Inneren des Gestänges 10 via Verkleidung 23 verläuft, ein Steuerungssignal an den Computer. Der Computer sendet eine in Echtzeit errechnete 3D Bildsequenz als Signal über die Grafikkarte 25 an den Sender der Videobrille 3b. Der Sender der Videobrille 3b sendet die Bildsequenz mit einer Sendefrequenz von 2.4-2.4835 GHz an den Empfänger der Videobrille 3a. Die Bildsequenz wird in Echtzeit angezeigt. Der Cursor verändert in Echtzeit seine Position innerhalb des virtuellen Raumes.

### Drehbewegung

Der am Gestänge befestigte optische Sensor 21 misst durch auf dem Bewegungsring 9 angebrachte Reflektoren jede Bewegung in der X - Achse. Der optische Sensor 21 sendet die Signale 1500 mal pro Minute, wodurch eine exakte Berechnung im Computer gewährleistet wird. Diese werden über ein Datenkabel gesendet. Der Computer sendet eine in Echtzeit errechnete 3D Bildsequenz als Signal über die Grafikkarte 25 an den Sender der Videobrille 3b. Der Sender der Videobrille 3b sendet die Bildsequenz mit einer Sendefrequenz von 2.4- 2.4835 GHz an den Empfänger der Videobrille 3a. Die Bildsequenz wird in Echtzeit angezeigt. Der Anwender bewegt sich im virtuellen Raum um die X - Achse nach links oder rechts.

### Anwendungswerkzeug

Am vorderen Ende des Anwendungswerkzeuges 8 befindet sich ein 3D Positionssensor 19a (Sender). Dieser sendet an den 3D Positionssensor 19b (Empfänger) die Bewegungssignale des Anwendungswerkzeuges 8. Der 3D Positionssensor 19b ( Empfänger) sendet die empfangenen Signale über ein Datenkabel, das im Gestänge 10 verläuft an den Computer. Der Computer sendet eine in Echtzeit errechnete 3D Bildsequenz als Signal über die Grafikkarte 25 an den Sender der Videobrille 3b. Der Sender der Videobrille 3b sendet die Bildsequenz mit einer Sendefrequenz von 2.4-2.4835 GHz an den Empfänger der Videobrille 3a. Die Bildsequenz wird in Echtzeit angezeigt. Das Anwendungswerkzeug 8 ( Kursor, Fadenkreuz u.a. ) verändert in Echtzeit seine Position innerhalb des virtuellen Raumes.
Über vier am Anwendungswerkzeug 8 angebrachte Kontaktschalter 24 sind Steuerungen im System und das Umschalten zu anderen Anwendungen möglich. Der Anwender hat die Möglichkeit eine andere Anwendung im Computer zu starten oder andere Funktionen des Anwendungswerkzeuges 8 zuzuschalten, zu verändern oder abzuschalten.

### Laufbewegung

Beim Laufen mit den Fun-Boots 13a werden durch den Einsatz z.B. optischer Sensoren 13b in den Sohlen der Schuhe Steuerungssignale per Funk an den Funkempfänger 13c gesendet. Der Funkempfänger 13c sendet diese Signale über ein Datenkabel weiter an den Computer. Der Computer sendet eine in Echtzeit errechnete 3D Bildsequenz als Signal über die Grafikkarte 25 an den Sender der Videobrille 3b. Der Sender der Videobrille 3b sendet die Bildsequenz mit einer Sendefrequenz von 2.4-2.4835 GHz an den Empfänger der Videobrille 3a. Die Bildsequenz wird in Echtzeit angezeigt. Der Anwender bewegt sich in der virtuellen Umgebung vor oder rückwärts. Durch langsames Laufen ist schleichen und durch schnelles Laufen ist rennen möglich.

### Laufen mittels Laufband

Der Anwender bewegt seine Schuhe ( Fun-Boots 13a ) nach vorne oder hinten, um vor oder zurückzulaufen. Die Steuerungsboots senden ein Steuerungssignal über die Sensoren 13b in den Sohlen an den Empfänger 13e. Die Verbindung zum Computer erfolgt wie bei der allgemeinen Laufbewegung beschrieben.
Der Computer sendet Steuerungssignale an den Motor des Laufbandes. Zwei am Laufband angebrachte Motoren bewegen das Laufband nach der Geschwindigkeit mit der gelaufen wird. Jede Art des Laufens wird unterstützt. Der Anwender bewegt sich im virtuellen Raum in jede gewünschte Laufrichtung. Das Laufband kann aber auch so geschaltet werden, dass der Benutzer das Laufband antreibt.

### Horizontale Bewegung der Bodenplatte

Die Bodenplatte 12 bewegt sich rotatorisch zugleich mit dem Bewegungsring 9. Durch ein hydraulisches Feedback-System sind Steigungen und Vertiefungen simulierbar.

Der am Gestänge befestigte optische Sensor 21 misst durch auf dem Bewegungsring 9 angebrachte Reflektoren jede Bewegung in der X - Achse. Der optische Sensor 21 sendet die Signale 1500 mal pro Minute, wodurch eine exakte Berechnung im Computer gewährleistet wird. Diese werden über ein Datenkabel gesendet, das am Gestänge 10 verläuft an den Computer. Dieser sendet an das Steuerungsmodul der Drehmotoren der Plattform ein Signal zur Bewegung. Die Motoren drehen die bewegliche Bodenplatte um eine Achse. Je nach Anwendungssoftware sind Neigungen und Bewegungen des Bodens möglich. Dem Anwender wird eine realistische Simulation von Neigung, Steigung und Bewegungen des Bodens vermittelt.
Ist die horizontal bewegliche Bodenplatte mit einem integrierten Laufband ausgestattet, so sind Lauf- und Drehbewegungen auch ohne FunBoots möglich.

### Vitalfunktions-Kontrollsystem

Die Pulsfrequenzmessung und oder Blutdruckmessung erfolgt durch einen am Arm des Anwenders befestigtes Messgerät 18 ( Sender). Dieser sendet die Vitalwerte des Anwenders an den Empfänger des Messgerätes 13e. Der Empfänger des Messgerätes 13e sendet die Signale über ein Datenkabel weiter an den Computer. Der Computer sendet eine in Bildsequenz als Signal über die Grafikkarte 25 an den Vitalkontrollmonitor 17. Die Vitalwerte werden in einem kleinen Fenster im Monitor angezeigt. Bei Vitalwerten, die über den Normalwerten des Anwenders liegen, wird die Anwendung sofort beendet um die Sicherheit des Anwenders zu gewährleisten. Dem Anwender wird außerdem das Gefühl der Sicherheit des RSS vermittelt.
Anstelle des beispielhaft beschriebenen Messgeräts können erfindungsgemäß auch andere Geräte Verwendung finden zur Kontrolle der Vitalfunktion des Anwenders.
In anderen Ausführungsformen können alternativ oder additiv weitere Körperfunktionen überwacht oder gemessen werden wie bereits zuvor zur Erfindung oder zum Stand der Technik beschrieben, beispielsweise die Oberflächentemperatur des Körpers über Geräte für den Tastsinn oder andere Sensoren am Körper des Anwenders. Dazu bieten sich auch Kontrollen der Augenreaktion, des Atems und ähnliches an, je nach Ausstattungsgrad des RSS. Die Geräte dafür sind aus der Medizin oder dem beschriebenen Stand der Technik für sich bekannt, aber deren Anwendung im Zusammenhang mit einem RSS neu.
In einer weiteren Ausführungsform kann der Benutzer auch selbst Werte von einer Körperfunktion vorgeben und überwachen lassen. Bei Erreichen dieser Vorgabe-Werte kann dann das Gerät zum Abschalten veranlasst werden.
In einer weiteren Modifikation kann ein Dritter diese Werte mit Hilfe des Monitors oder einer anderen Anzeigeeinrichtung Funktionen bzw. Reaktionen des Anwenders bzw. seines Körpers kontrollieren und gegebenenfalls z.B. bei Erreichen kritischer Werte eingreifen, z.B. das System abschalten. Der Monitor kann für den Dritten auch die derzeitige Anwendung des RSS - Spiel oder Simulation oder ähnliches - wiedergeben, sofern der Benutzer die zuläßt. Letztlich kann in einer Ausführungsform das System Standardwerte für Körperfunktionen als Vorgabe enthalten, bei deren Erreichen eine Warnanzeige geschaltet oder das System stillgesetzt wird.

### Sprachsteuerung / Sprachbeeinflussung

Die Sprachsteuerung wird durch eine handelsübliche Sprachsteuerungssoftware Dragon Naturally Speaking der Firma Lernout & Hauspie Speech Products N.V., BE realisiert. Der Anwender spricht über das Mikrofon 4 Steuerungsbefehle für den Computer. Die Signale des Mikrofons werden an den Empfänger der Videobrille 3a weitergeleitet. Der Sender der Videobrille 3b sendet das Signal weiter über das Gestänge 10 an den Computer. Der Anwender ist somit in der Lage verschiedene Anwendungsprogramme zu starten oder zu beenden. Der Anwender kann seine eigenen gesprochenen Worte oder Laute verstärkt hören was zu einer Verstärkung führt sich in einer virtuellen Welt zu befinden.

## Patentansprüche

1. Reality Simulations System, umfassend
einen die mechanischen realen Systemgrenzen definierenden Bewegungskäfig (10, 30) mit mindestens einer Bodenplatte (12, 12-2, 12-4) und mindestens zwei oberhalb der Bodenplatte (12) aufragende Systemelemente (10) von mehr als der Größe eines stehenden Benutzers,
einen den Benutzer umgebenden Bewegungsring (9) mit rotatorischem Freiheitsgrad in mindestens einer Ebene am Bewegungskäfig (10, 30),
ein mittels Software gesteuertes Rechner-System für das Erfassen und Verarbeiten von mindestens Sinneseindrücken für Benutzer und Steuern des Systems,
Eingabe- und Ausgabesystemteile, die mit dem Rechner und einem Benutzer des Systems, der sich im Bewegungskäfig (10, 30) aufhält, in Wirkverbindung stehen und wobei der Bewegungsring (9) mit dem Bewegungskäfig (10, 30) und dem Benutzer koppelbar ist.

2. Reality Simulations System nach Anspruch 1, **dadurch gekennzeichnet, dass** der Bewegungskäfig (10, 30) einen bewegbaren Bewegungsring (9) enthält, der mit dem Benutzer mechanisch (8) und / oder elektrisch und / oder signaltechnisch (1, 2, 3A, 4, 13B, 19A, 24 ; 3B, 11, 13C, 19B, 21, 22) koppelbar ist, vorzugsweise über einen Gürtel (5) am Körper des Benutzers.

3. Reality Simulations System nach Anspruch 1 oder 2, **dadurch gekennzeichnet, dass** das System Sende- und Empfängereinrichtungen (1, 2, 3A, 4, 13B, 19A, 24) für Signale am Körper des Benutzers umfasst, wobei diese Einrichtungen (3B, 11, 13C, 19B, 21, 22) signaltechnisch direkt mit dem Bewegungskäfig (10, 30) verbindbar sind.

4. Reality Simulations System nach einem der vorhergehenden Ansprüche, **dadurch gekennzeichnet, dass** der Bewegungskäfig (10, 30) eine ebene, vorzugsweise runde, Bodenfläche (12, 12-2, 12-4) hat, die insgesamt oder in Teilen durch den Benutzer oder einen motorischen Antrieb nach Art eines Laufbandes (12-1) oder einer Drehscheibe bewegbar ist.

5. Reality Simulations System nach einem der vorhergehenden Ansprüche, **dadurch gekennzeichnet, dass** der Benutzer mit dem Bewegungsring (9) oder dem Bewegungskäfig (10, 30) über Federelemente (6) koppelbar ist.

6. Reality Simulations System nach einem der vorhergehenden Ansprüche, **gekennzeichnet durch** einen Schuh (13A) für Benutzer des Reality Simulations Systems als Eingabegerät für das System, dessen Sohle über Sensoren, vorzugsweise nach Art eines Trackball oder einer Maus (13e, 13d) verfügt.

7. Reality Simulations System nach einem der vorhergehenden Ansprüche, **dadurch gekennzeichnet, dass** ein Ausgabegerät für Benutzer des Reality Simulations Systems ausgebildet ist als gekrümmte Videowand, vorzugsweise als ringförmiger Plasma-Bildschirm.

8. Reality Simulations System nach einem der vorhergehenden Ansprüche, **gekennzeichnet durch** ein Vitalfunktions-Kontrollsystem, umfassend mindestens eine Kontrolleinrichtung für mindestens eine Körperfunktion des Benutzers des Systems, wobei mit der Kontrolleinrichtung mindestens folgende Schritte durchgeführt werden können: Sensieren mindestens eines Messwerts dieser Körperfunktion mittels Sensor (13, 18), Weiterleiten eines Messwertsignals zu einem Rechner mittels einer Signaleinrichtung (13c), Auswerten des Signals und Anzeigen des vom Rechner erfassten Signals in einer für den Messwert repräsentativen Art mit mindestens einer Anzeige (17) und Beaufschlagen einer Steuereinrichtung des Systems mit dem Ergebnis der Auswertung.

9. Reality Simulations System nach Anspruch 8, **dadurch gekennzeichnet, dass** die Steuereinrichtung eine Warneinrichtung für den Benutzer oder Dritte oder eine Abschalteinrichtung für das System beaufschlagt.

## Claims

1. Reality simulation system, comprising a mobile cage (10, 30) that defines the mechanical, physical boundaries of the system, the said cage having at least one bottom plate (12, 12-2, 12-4) and at least two system elements (10) that extend above the bottom plate (12) by more than the height of a user standing on the said bottom plate, a mobile ring (9) that surrounds the user and has a rotary degree of freedom in at least one plane at the mobile cage (10, 30), a computer system that is controlled by means of software for the acquiring and processing of at least sensations for users and controllers of the system, input and output system components, which are in operative connection with the computer and with a user of the system, who is situated in the mobile cage (10, 30), and wherein the mobile ring (9) is couplable to the mobile cage (10,30) and to the user.

2. Reality simulation system according to claim 1, **characterised in that** the mobile cage (10, 30) includes a displaceable mobile ring (9), which is couplable to the user in a mechanical (8) manner and/or electrical manner and/or signalling manner (1,2, 3A, 4,13B, 19A, 24; 3B, 11, 13C, 19B, 21, 22), preferably by means of a belt (5) on the body of the user.

3. Reality simulation system according to claim 1 or 2, **characterised in that** the system includes transmitting and receiving devices (1, 2, 3A, 4, 13B, 19A, 24) for signals on the body of the user, wherein the said devices (3B, 11, 13C, 19B, 21, 22) are directly connectable in a signalling manner to the mobile cage (10, 30).

4. Reality simulation system according to one of the preceding claims, **characterised in that** the mobile cage (10, 30) has a flat, preferably round, bottom surface (12, 12-2, 12-4), which is displaceable completely or in sections by the user or by a motor driving means in the manner of a treadmill (12-1) or a turntable.

5. Reality simulation system according to one of the preceding claims, **characterised in that** the user is couplable to the mobile ring (9) or the mobile cage (10, 30) by means of spring members (6).

6. Reality simulation system according to one of the preceding claims, **characterised by** a shoe (13A) for users of the reality simulation system in the form of an input device for the system, the sole of which shoe having sensors, preferably in the manner of a trackball or a mouse (13e, 13d).

7. Reality simulation system according to one of the preceding claims, **characterised in that** an output device for users of the reality simulation system is in the form of a curved video wall, preferably in the form of a ring-shaped plasma screen.

8. Reality simulation system according to one of the preceding claims, **characterised by** a vital function control system, comprising at least one control device for at least one body function of the user of the system, wherein using the control device at least the following steps can be carried out: sensing at least one measured value of the said body function by means of sensors (13, 18), forwarding a measured value signal to a computer by means of a signalling device (13c), evaluating the signal and displaying the signal acquired by the computer in a manner that is representative for the measured value using at least one display means (17) and impinging on a control device of the system with the result of the evaluation.

9. Reality simulation device according to claim 8, **characterised in that** the control device impinges upon a warning device for the user or a third party or a closing-down device for the system,

## Revendications

1. Système de simulation par réalité virtuelle, comportant
une cage de déplacement (10, 30) définissant les limites mécaniques réelles du système dotée d'au moins une plaque de fond (12, 12-2, 12-4) et d'au moins deux éléments de système (10) faisant saillie au-dessus de la plaque de fond (12) en dépassant la taille d'un utilisateur debout,
un anneau de déplacement (9) entourant l'utilisateur doté d'un degré de liberté rotatif dans au moins un plan sur la cage de déplacement (10, 30),
un système de calcul commandé au moyen d'un logiciel pour la détection et le traitement d'au moins les impressions sensorielles instantanées pour l'utilisateur et la commande du système,
des éléments du système d'introduction et de sortie, qui sont en liaison fonctionnelle avec le calculateur et un utilisateur du système séjournant dans la cage de déplacement (10, 30) et l'anneau de déplacement (9) pouvant être couplé à la cage de déplacement (10, 30) et à l'utilisateur.

2. Système de simulation par réalité virtuelle selon la revendication 1, **caractérisé en ce que** la cage de déplacement (10, 30) contient un anneau de déplacement mobile (9), qui peut être couplé de façon mécanique (8) et/ou électrique et/ou par technique de signaux (1, 2, 3A, 4, 13B, 19A, 24; 3B, 11, 13C, 19B, 21, 22) à l'utilisateur, de préférence par une ceinture (5) sur le corps de l'utilisateur.

3. Système de simulation par réalité virtuelle selon la revendication 1 ou 2, **caractérisé en ce que** le système comporte des dispositifs d'émission et de réception (1, 2, 3A, 4, 13B, 19A, 24) de signaux sur le corps de l'utilisateur, ces dispositifs (3B, 11, 13C, 19B, 21, 22) pouvant être raccordés directement à la cage de déplacement (10, 30) par technique de signaux.

4. Système de simulation par réalité virtuelle selon l'une quelconque des revendications précédentes, **caractérisé en ce que** la cage de déplacement (10, 30) présente une surface de fond (12,12-2,12-4) plane, de préférence ronde, qui peut être déplacée en partie ou entièrement par l'utilisateur ou un entraînement motorisé à la façon d'un tapis roulant (12-1) ou d'un plateau tournant.

5. Système de simulation par réalité virtuelle selon l'une quelconque des revendications précédentes, **caractérisé en ce que** l'utilisateur peut être couplé à l'anneau de déplacement (9) ou à la cage de déplacement (10, 30) par des éléments formant ressort (6).

6. Système de simulation par réalité virtuelle selon l'une quelconque des revendications précédentes, **caractérisé par** une chaussure (13A) pour l'utilisateur du système de simulation par réalité virtuelle comme appareil d'introduction pour le système, dont la semelle dispose de capteurs, de préférence à la façon d'une boule de pointage ou d'une souris (13e,13d).

7. Système de simulation par réalité virtuelle selon l'une quelconque des revendications précédentes, **caractérisé en ce qu'**un appareil de sortie pour l'utilisateur du système de simulation par réalité virtuelle est conçu comme une vidéomosaïque incurvée, de préférence comme un écran plasma annulaire.

8. Système de simulation par réalité virtuelle selon l'une quelconque des revendications précédentes, **caractérisé par** un système de contrôle des fonctions vitales, comportant au moins un dispositif de contrôle pour au moins une fonction corporelle de l'utilisateur du système, au moins les étapes suivantes pouvant être réalisées avec le dispositif de contrôle : détection d'au moins une valeur mesurée de cette fonction corporelle au moyen d'un capteur (13, 18), transmission d'un signal de valeur mesurée à un calculateur au moyen d'un dispositif de signaux (13c), analyse du signal et affichage du signal détecté par le calculateur dans une catégorie représentative pour la valeur mesurée avec au moins un affichage (17) et sollicitation d'un dispositif de commande du système avec le résultat de l'analyse.

9. Système de simulation par réalité virtuelle selon la revendication 8, **caractérisé en ce que** le dispositif de commande sollicite un dispositif d'avertissement pour l'utilisateur ou un tiers ou un dispositif de déconnexion pour le système.
